Europäisches Patentamt

European Patent Office

Office européen des brevets

(11) Publication number: **0 146 904**
**A2**

(12) **EUROPEAN PATENT APPLICATION**

(21) Application number: **84115628.4**

(22) Date of filing: **17.12.84**

(51) Int. Cl.⁴: **C 09 K 21/00**
**C 09 K 3/00**

(30) Priority: **19.12.83 IT 2424383**

(43) Date of publication of application:
**03.07.85 Bulletin 85/27**

(84) Designated Contracting States:
**AT BE CH DE FR GB LI LU NL SE**

(71) Applicant: SABO S.p.A.
Via Caravaggi
I-24040 Levate (Bergamo)(IT)

(72) Inventor: Lancia, Angelo
Via G. Marconi, 73
I-24020 Scanzorosciate (Bergamo)(IT)

(74) Representative: Dr. Ing. A. Racheli & C.
Viale San Michele del Carso, 4
I-20144 Milano(IT)

(54) Composite thickening agent.

(57) A composite thickening agent comprising two or more thickening agents of different sensitivity to ions and a component which is ionizable in water, indicated here as "ionic component". The thickening agent components are selected and proportioned so that each one, being sensitive to a different degree of ionic concentration, has a different thickening action in the presence of different levels of dilution. In practice the less sensitive ones work at greater ionic concentration, the more sensitive ones at higher levels of dilution (lower ionic concentration). In this way the composite thickening agent allows the viscosity of an ionic solution or suspension to be kept relatively constant during the entire process of dilution.

EP 0 146 904 A2

- 1 -

Applicant:

SABO S.p.A.

Via Caravaggio

IT - 24040 LEVATE (Bergamo)

"COMPOSITE THICKENING AGENT"

This invention refers to a thickening agent for ionic solutions.

As is known, thickening agents are products which have the function of making viscous (thickening), even to a high degree, acqueous solutions in which other substances (primary or secondary active components) are dissolved or dispersed, the composition of said substances being determined by their use for specific purposes (for example, fireproofing, insecticides and other things).

Among the large bibliography on the properties and colloidal behaviour of thickening agents in an acqueous solution, reference can be made to the classical treatise of H. Staudinger (Colloidal chemistry - Organic colloids - 1943).

The behaviour of colloidal thickening agents in an ionic solution is also known and there are several such products found on sale. In particular, it has been ascertained that, at a determined ionic concentration, specific for both each type of colloid and each type of ion in the solution, the colloid's molecules undergo dehydration as a result of a modification in the set of the electrostatic shell around said colloid's large molecule, in this way altering its thickening capacity.

As the dilution of the solution proceeds the viscosity of the same changes.

This leads to a series of inconveniences in the practical application of such solutions, especially wherein the problem of having a highly concentrated and viscous initial product exists, for example for conveying and preserving reasons, and, on the other hand, the need to use it in the diluted state in the place of application, but at the same time still having a certain viscosity which allows to keep it as a layer of some thickness on the application surfaces. This is the case, for example, with fireproofing substances and paint.

No solution had been found to this problem, although it was relevant and involved many different fields, in the industrial as well as in the agricultural and various other fields, as mentioned below. In fact, such a problem appeaers to imply a contradiction: the solution is required to have a certain viscosity, both when preparing the concentrate (up to about 10,000 cp, so as to still permit transvasing) for diluting and on applying said concentrate after dilution, when said solution, however, must still have a viscosity between several tens and a few thousands of cp (centipoises) (usually not higher than 3000), according to the requirements of the use provided for.

This means that an active composition is required, the viscosity of which is not too high in suspension or in a solution at the initial stage of preparation, in which it is concentrated, but is still sufficiently high on application, when it is considerably diluted, but must still be viscous enough to stick to the surface to which it must act.

This difficulty, for which the solution is of primary importance, had still not been satisfactorily resolved by the products on sale.

In fact, the thickening agents used at present show a clear tendency to considerable decrease in viscosity as an effect of dilution, thereby causing unfavourable conditions both initially, when viscosity is too high and on application, when final viscosity is too low. As is clear from the following examples, reductions in viscosity occur up to 1/100 for dilutions of the composition in the ratio of 1:4.

Therefore, the object of this invention is a thickening agent product for obtaining ionic solutions which have a constant degree of viscosity, even after being strongly diluted to widely varying levels.

For this purpose an experimental study has been carried out into the behaviour of various types of thickening agents (which act as colloids in an acqueous solution) in general use, of vegetable, animal and synthetic origin, in ionic solutions with a different qualitative and quantitative composition both as regards dehydration in the presence of ionic substances and the combination of two or more thickening agents, previously classified according to their sensitivity to ions and in relation to the viscosity of their solutions at different levels of dilution.

In this way it has been found, surprisingly, that not only is it possible to obtain sufficiently viscous ionic solutions, also at dilutions as high as ratios of 1:10, but even, in a borderline case, a relative increase in viscosity with dilution.

According to this invention the purpose is achieved by combining in one composite product two or more thickening agents, selected so as to have different ionic sensitivity and proportioned so that the less sensitive ones ensure viscosity at greater ionic concentration, usually in the initial stage, whereas the more sensitive ones (to the presence of ions, that is, to the ionic concentration) ensure viscosity at lower ionic concentration (that is, they are suitable for carrying out the thickening action with higher dilutions).

Therefore, this invention consists of a type of unforeseeable thickening agent, which acts in an ionic solution or suspension, characterized by the presence of two or more thickening agents of different sensitivity to ions, selected and proportioned so that each one is individually sensitive to a different level of dilution and intervenes in the course of the dilution at the ionic concentration to which it is sensitive, so as to establish in said solution a viscosity which remains almost constant or decreases very little between start and finish of the operation in which the solution takes part.

In practice this means that the present invention supplies, in this way, composite thickening agents which meet thickening requirements in ionic solutions of different dilution according to use, allowing a given effect to be achieved, foreseen for the use of the final product in which said thickening agents are incorporated. The final product may be, for example, paint, a fireproofing substance or other things, as specified below.

In other words the thickening agents according to this invention are able to give the ionic solutions, in which they are present, the reequired viscosity whether at a higher initial concentration (at start of application) or at a more diluted final solution, thus supplying an almost constant viscosity within a wide range of dilution.

Therefore, the interest of this invention is evident for many different fields, wherever there is the need to maintain the solution at a constant viscosity both during its preparation and application.

As specified above, this invention is characterized more in particular by the presence of many different types of thickening agents in an ionic solution, in which they act. This explains the necessity to include in their formulation a compound which gives rise to ions in an acqueous solution.

This present invention, therefore, regards an unforeseeable combination of two or more thickening agents selected, on each occasion, in different ratios relative to one another and according to the ionic component, in the presence of which they act so as to meet the viscosity requirements at the dilutions for use foreseen for the final product solution which may be, for example, a fireproofing substance, a dye, a pickle agent or the like.

Therefore, the thickening agents making up the composition according to the present invention and their reciprocal ratios are, of course, selected according to the ionic component, the implicit difference in level upstream and downstream (that is, the level of dilution required for a definite use) and, naturally, the requirements of the use foreseen for the product in which the thickening agent is incorporated. Obviously, besides the active components for a definite use, auxiliaries and different additives can also be incorporated, according to the products in which they

- 7 -

are incorporated. Said products may be, for example, fireproofing substances, dyes, pickle agents or other industrial products.

In particular the thickening agents may be, as already indicated, of natural (vegetable or animal) or synthetic origin. Among the substances of vegetable origin the following, in particular, may be mentioned: carbohydrates and their derivatives from hydrolysis, such as amides, feculae, dextrins, pectins, agar, alginates, cellulose and others. Among the natural substances of animal origin there are proteins, lipoproteins, glycoproteins and others. Among modified natural substances carbo-oxymethylcellulose, alkylcellulose and oxydized carbohydrates may be mentioned. Among the synthetic polymers polyvinyls, polyacrylics and polyoxyalkylenes may be mentioned among others.

The ionic compounds foreseen according to this invention, in the medimum in which the thickening agent reacts, are selected so as to be compatible with the thickening agents present and with the other components in the solution to be thickened. Said ionic compounds are selected from among, for example, sodium chloride, sodium phosphate, sodium sulphate and ammonium phosphate, also together with other ammonium salts and various other salts (also basic or acid salts).

It should be kept in mind that the ions, whose presence is essential for realizing the thickening action according to this invention, may be introduced into the composition of the thickening agent in order to obtain such an effect, first of all through the formulation's active part, specific to a definite use of the final product, present in the solution to be thickened. This is done, for example, with such products as fireproofing substances, fire retardants, dyes, pickle agents and others, in which the ions make up the active part of the composition foreseen for a specific use.

However, the ions may also be introduced into the composition with the principal aim of acting expressly on the thickening agents in order to influence their viscosity during dilution, that is, to allow an almost constant viscosity to be maintained even with varying levels of dilution.

Exemplary applications of the thickening agents according to this invention.

As has already been pointed out, this invention can be applied in many different fields, in which there is the need for almost constant viscosity during gradual dilution in the medium being used. In other words, summarizing what has been stated above, it is necessary that:

a) the components have a certain initial viscosity (in the product supplied on the market), determined by various needs such as obtaining stable solutions (non-sedimenting) of insoluble compounds;

b) a certain viscosity of the product, diluted when applied is present to obtain a deposited layer of greater thickness or a better distribution on the surface treated or a greater ease in distribution (larger drops) or also for psychological reasons related to appearance or other.

These problems are met, for example, when applying dyes, pigments or other active substances on smooth surfaces in the field of wall paint; in the preparation of disinfectants and insecticides for agriculture or other fields, in the intervention and prevention against various forms of biological aggression, as well as in the field of adhesives, for applying them onto many different supports, for example onto sheets of paper, fabrics or other, and in many other fields.

A particularly interesting use is in the field of fireproofing substances or fire retardants to be applied onto many different supports, such as plants, buildings, fabrics and various others. In this case it is a question of simultaneously reconciling urgent intervention, requiring a quicky soluble product and viscosity, so as to allow rapid transfer of the solution to the medium of application, with a viscosity which permits the solution to be sprayed – without, however, excessive dispersion – as well as with a final viscosity, that is at the moment of application, sufficient to form a layer on the surface treated of such a thickness to avoid excessive flowing from point of application, thus leading to loss of active product.

Below are given some illustrative and comparative examples (I-IV), but not binding, of compositions according to this invention. They are in the form of tables and diagrams and aim to make the present

- 10 -

invention clearer.

In these examples the effect is highlighted of combining different thickening agents selected so as to present a different sensitiveness to the ions, such as in the presence of different ionic products, like those exemplified in the accompanying illustrative diagrams and in the tables below, they produce the required effect (more or less evident) of constant viscosity at different, increasingly greater, dilutions.

In the accompanying illustrative diagrams and the respective tables, which explain the illustrative diagrams, the viscosities have been expressed, at the most significant dilutions of 1:2, 1:4 and 1:8, by the ratio of increase or decrease with respect to the initial viscosity.

Thus, in example I, represented in table I and in illustrative diagram I - in which the ionic compound is sodium chloride, the thickening agent A is agar and the thickening agent B is· methylcellulose - curves 1 and 2 represent the different behaviour of two thickening agents, namely agar (curve No 1), whose thickening action decreases rapidly as an effect of dilution, and methylcellulose (curve No 2), in which initial inactivation is noted which, owing to the high ionic concentration, leads to very fluid solutions, the latter only becoming viscous in the following stage of greater dilution.

Each of these cases, taken separately, does not allow a condition of constant viscosity with dilution to be realised, as is clear from the values for the viscosity ratios expressed in the corresponding table.

Curve No 3 (representing a solution without ions) clearly expresses the considerable decrease in viscosity, whereas curves 4 and 5 distinctly show that, in these two cases, the purpose foreseen by this invention of avoiding wide variations in viscosity has been realized.

In examples II and III (table and illustrative diagram 2 and table and illustrative diagram 3) similar curves to those in example I can be seen, but with different, absolute and relative, viscosity values, in as far as the composition's components are different, namely in illustrative diagram 2 and in table 2 the ionic compound is .represented by dibasic ammonium phosphate, whereas the thickening agents A and B are equal to those in table I. In illustrative diagram 3 and in table 3 the ionic compound is again different, being sodium sulphate, but the thickening agents remains the same.

Example IV (table 4 and illustrative diagram 4) shows a case in which there are three thickening agents, that is, the thickening agent's composition is made up of three components, namely pectin, sodium alginate and methylcellulose. The ionic compound is sodium phosphate which is characterized by a higher ionic charge. The curve clearly indicates the prolonged constant viscosity, foreseen by this invention, which even continues beyond a dilution of 1:10.

J146904

### EXAMPLE I - Table 1

| CURVE | COMPONENTS % | | | |
|---|---|---|---|---|
| No sign | ION | THCK. AG. A | THCK. AG. B | THCK. AG. C |
| 1 — + | 16 | 0,25 | – | – |
| 2 — X | 16 | – | 2,0 | – |
| 3 — ● | – | 0,25 | 2,0 | – |
| 4 — O | 16 | 0,25 | 2,0 | – |
| 5 — ⊖ | 16 | 0,25 | 1,8 | – |

THCK. AG. A = Agar
THCK. AG. C = ——

### EXAMPLE II - Table 2

| CURVE | COMPONENTS % | | | |
|---|---|---|---|---|
| No sign | ION | THCK. AG. A | THCK. AG. B | THCK. AG. C |
| 1 — + | 6,0 | 0,3 | – | – |
| 2 — X | 6,0 | – | 2,5 | – |
| 3 — ● | – | 0,3 | 2,5 | – |
| 4 — O | 6,0 | 0,3 | 2,5 | – |
| 5 — | | | | |

THCK. AG. A = Agar
THCK. AG. C = ——

### EXAMPLE III - Table 3

| CURVE | COMPONENTS % | | | |
|---|---|---|---|---|
| No sign | ION | THCK. AG. A | THCK. AG. B | THCK. AG. C |
| 1 — + | 6,0 | 0,25 | – | – |
| 2 — X | 6,0 | – | 1,9 | |
| 3 — ● | – | 0,25 | 1,9 | |
| 4 — O | 6,0 | 0,25 | 1,9 | |
| 5 — | | | | |

THCK. AG. A = Agar
THCK. AG. C = ——

### EXAMPLE IV - Table 4

| CURVE | COMPONENTS % | | | |
|---|---|---|---|---|
| No sign | ION | THCK. AG. A | THCK. AG. B | THCK. AG. C |
| 1 — | | | | |
| 2 — | | | | |
| 3 — | | | | |
| 4 — O | 30 | 1,2 | 2,0 | 4,0 |
| 5 — | | | | |

THCK. AG. A = Pectin
THCK. AG. C = Methylcellulose

– 13 –

## COMPARATIVE EXAMPLES

| TABLE 1 | | IONIC COMPOUND = SODIUM CLORIDE<br>THICKENING AGENT A = AGAR<br>THICKENING AGENT B = METHYLCELLULOSE | | | | | | |
|---|---|---|---|---|---|---|---|---|
| DIAGRAM No | CURVE No | % components | | | | Viscosity at diff; dilut; levels | | |
| | | ION | THCK. AG. A | AG. B | AG. C | Initial | 1 : 4 | Ratio |
| 1 | 1 | 16 | 0,25 | — | – | 110 | 1,5 | 73 : 1 |
| 1 | 2 | 16 | — | 2,0 | – | 5 | 110 | 1 : 22 |
| 1 | 3 | — | 0,25 | 2,0 | – | 40.000 | 300 | 133 : 1 |
| 1 | 4 | 16 | 0,25 | 2,0 | – | 300 | 200 | 2 : 1 |
| 1 | 5 | 16 | 0,25 | 1,8 | – | 250 | 90 | 2.8:1 . |
| TABLE 2 | | IONIC COMPOUND = DIBASIC AMMONIUM PHOSPATE<br>THICKENING AGENT A = AGAR<br>THICKENING AGENT B = METHYLCELLULOSE | | | | | | |
| 2 | 1 | 6,0 | 0,3 | – | – | 600 | 11,5 | 52 : 1 |
| 2 | 2 | 6,0 | – | 2,5 | – | 5 | 500 | 1 : 100 |
| 2 | 3 | – | 0,3 | 2,5 | | 80.000 | 1.050 | 76 : 1 |
| 2 | 4 | 6,0 | 0,3 | 2,5 | | 700 | 800 | 1 : 1,15 |
| TABLE 3 | | IONIC COMPOUND = SODIUM SULPHATE<br>THICKENING AGENT A = AGAR<br>THICKENING AGENT B = METHYLCELLULOSE | | | | | | |
| 3 | 1 | 6,0 | 0,25 | – | – | 100 | 1,5 | 66 : 1 |
| 3 | 2 | 6,0 | – | 1,9 | – | 4 | 70 | 1 : 17,5 |
| 3 | 3 | – | 0,25 | 1,9 | – | 15.000 | 115 | 130 : 1 |
| 3 | 4 | 6,0 | 0,25 | 1,9 | – | 200 | 130 | 1,5:1 |
| TABLE 4 | | IONIC COMPOUND = SODIUM PHOSPHATE<br>THICKENING AGENT A = PECTIN<br>THICKENING AGENT B = SODIUM ALGINATE<br>THICKENING AGENT C = METHYLCELLULOSE | | | | | | |
| 4 | 4 | 30 | 1,2 | 2,0 | 4,0 | 400<br>* 400 | 350<br>250 | 1,15 : 1<br>1,6 : 1 |

* Dilution ratio = 1/10

What has been stated above clearly indicates the important contribution of the new composite thickening agents in the field of ionic solutions.

It should be noted, in fact, that said thickening agents not only represent a simple and quick means of resolving thickening problems from the technical viewpoint, in many different fields, as shown above, but also offer through the use of an unforeseable expedient the advantages of a quicker and safer operation, flexibility of use for various purposes, reduction of the overall dimension, packaging, conveyance and time required to dilute the product for use, thus achieving various and appreciable reductions in costs.

SABO S.p.A.

IT – 24040 LEVATE (Bergamo)

C L A I M S

1.      A composite thickening agent for ionic solutions, characterized in that it comprises two or more thickening agents, each one sensitive to a different degree of ionic concentration of the solution in which they act, selected and proportioned so as to give said solution an almost constant viscosity at varying levels of dilution; and one or more ionic components.

2.      A composite thickening agent according to claim 1, characterized in that it also contains auxiliary components and additives selected according to the specific use to which the thickening agent is put.

3.      A composite thickening agent according to claim 1, characterized in that the composite thickening agent comprises thickening agents selected from substances of animal, vegetable and synthetic origin.

4.      A composite thickening agent according to claim 1, characterized in that the ionic component is selected from salts compatible with the thickening agents and with the component is selected from salts compatible with the thickening agents and with the components of the solution to be thickened.

5. A composite thickening agent according to claim 4, characterized in that the ionic component is a salt selected from sodium chloride, sodium phosphate, sodium sulphate and ammonium phosphate.

6. A composite thickening agent according to claim 4, characterized in that the ionic compound is included in the formulation of the thickening agent.

7. . A composite thickening agent according to claim 4, characterized in that the ionic component is included in the formulation to be thickened.

FIG.1

Dilution ratio with water
ION = Sodium chloride
THCK. AG. = Methylcellulose

FIG.2

Dilution ratio with water
ION = Dibasic ammonium phosphate
THCK. AG. = Methylcellulose

FIG.3

Viscosity (Cp)

Dilution ratio with water
ION = Sodium sulphate
THCK. AG. B = Methylcellulose

FIG.4

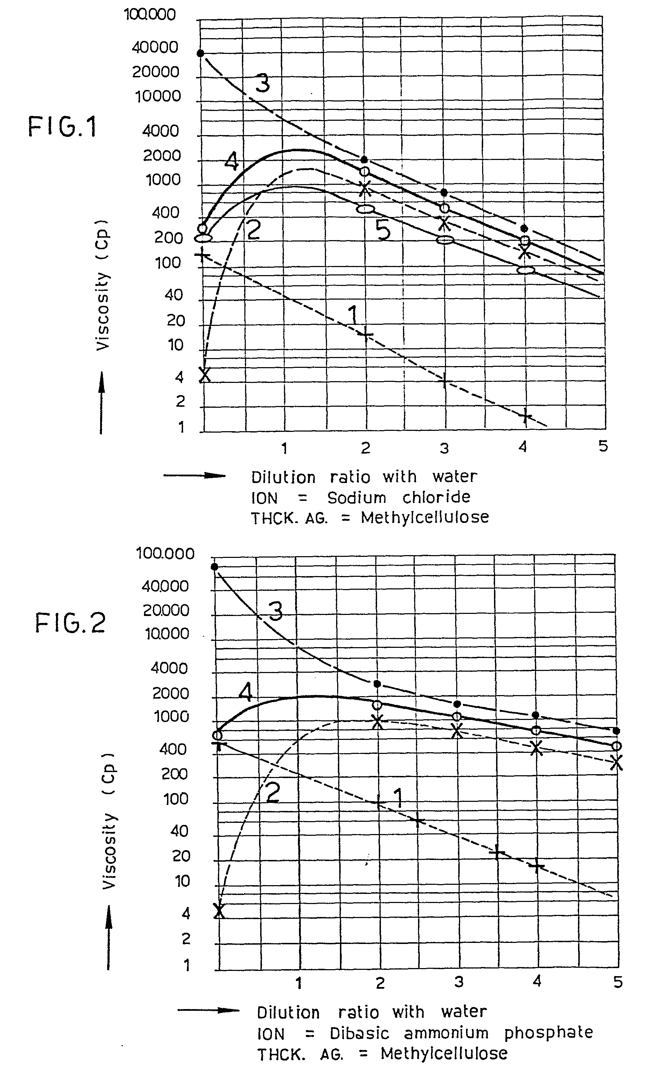

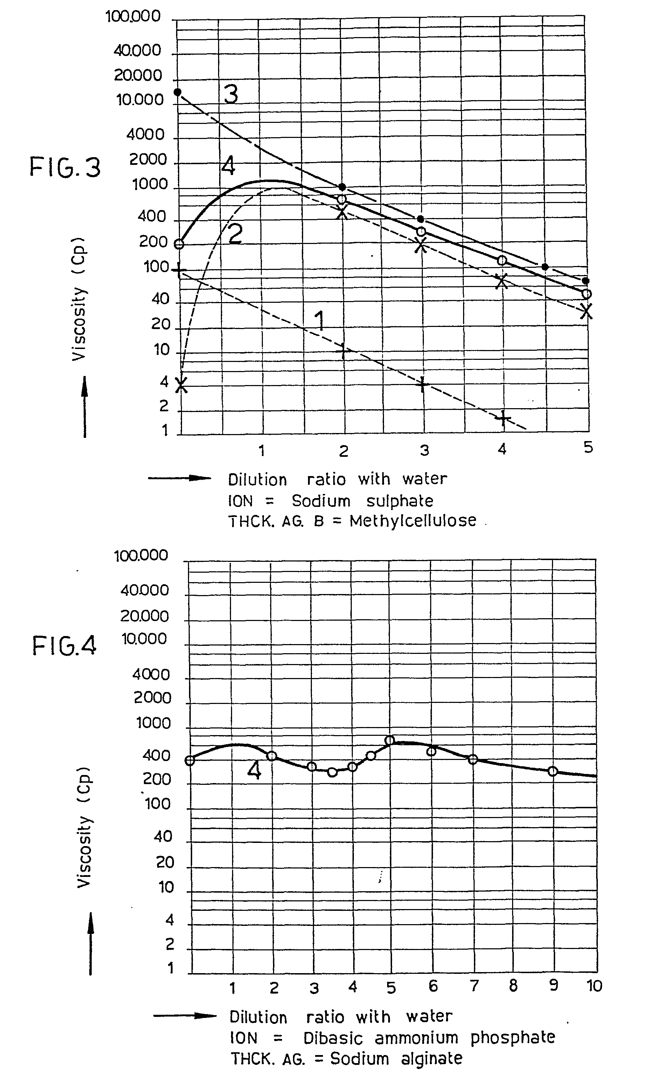

Viscosity (Cp)

Dilution ratio with water
ION = Dibasic ammonium phosphate
THCK. AG. = Sodium alginate